Europäisches Patentamt

European Patent Office

Office européen des brevets

(19)

(11) Numéro de publication: **0 439 401 B1**

## (12) FASCICULE DE BREVET EUROPEEN

(45) Date de publication de fascicule du brevet: **07.12.94**

(51) Int. Cl.⁵: **B60L 5/22**

(21) Numéro de dépôt: **91400144.1**

(22) Date de dépôt: **23.01.91**

(54) **Pantographe à suspension de tête amortie.**

(30) Priorité: **24.01.90 FR 9000799**

(43) Date de publication de la demande:
**31.07.91 Bulletin 91/31**

(45) Mention de la délivrance du brevet:
**07.12.94 Bulletin 94/49**

(84) Etats contractants désignés:
**AT BE CH DE DK ES FR GB GR IT LI LU NL SE**

(56) Documents cités:
**AU-B- 537 011**
**FR-A- 1 155 640**

(73) Titulaire: **FAIVELEY TRANSPORT**
**93 rue du Docteur Bauer**
**F-93407 Saint-Ouen (FR)**

(72) Inventeur: **Cathala, Jacques**
**Les Vallées**
**F-37510 Ballan-Mire (FR)**
Inventeur: **Forte, Pascal**
**8 Place François Rude**
**F-37200 Tours (FR)**

(74) Mandataire: **Keib, Gérard et al**
**Bouju Derambure (Bugnion) S.A.,**
**52 rue de Monceau**
**F-75008 Paris (FR)**

Rank Xerox (UK) Business Services
(3.10/3.09/3.3.3)

EP 0 439 401 B1

## Description

La présente invention concerne un pantographe destiné au captage du courant pour des motrices ferroviaires depuis des lignes aériennes à suspension caténaire.

L'invention vise plus particulièrement un pantographe dans lequel est améliorée la régularité du contact de sa tête avec la ligne caténaire notamment lorsque le train circule à des vitesses élevées.

Il est connu de réaliser des pantographes dont le bras supérieur supporte une tête qui assure le contact avec la ligne, cette tête étant raccordée au bras supérieur par une suspension élastique, par exemple à ressorts hélicoïdaux.

Habituellement, ces pantographes sont aussi munis d'une suspension qui agit sur l'ensemble de la structure du pantographe. Dans certains cas, cette dernière suspension comporte un amortisseur qui est situé à la partie inférieure du pantographe.

Des pantographes et/ou des amortisseurs pour pantographes selon l'art connu sont décrits dans les deux documents suivants.

Le brevet australien AU-B-537 011 (W. BUCHBERGER) décrit un amortisseur pour pantographe prévu pour amortir les mouvements de la structure tubulaire formant le cadre du pantographe. Il se propose de résoudre le problème du temps de réponse des amortisseurs classiques aux faibles courses. La solution classique par ailleurs, consiste à munir le piston de l'amortisseur de deux tiges opposées pour maintenir constant le volume utile du fluide d'amortissement.

Cet amortisseur de pantographe est adapté aux faibles courses et hautes fréquences. Il est composé d'une boîte de suspension, d'un fluide hydraulique, d'un piston solidaire d'une tige, ledit piston comportant des ouvertures, et d'un ressort, et est placé sur une au moins des parties en mouvement du cadre des collecteurs de courant.

Le brevet français FR-A-1 115 640 (Karl WANISH) décrit un amortisseur pour pantographe destiné à amortir le mouvement des bras (voir figure 1 de ce brevet).

L'amortisseur agit essentiellement aux efforts horizontaux.

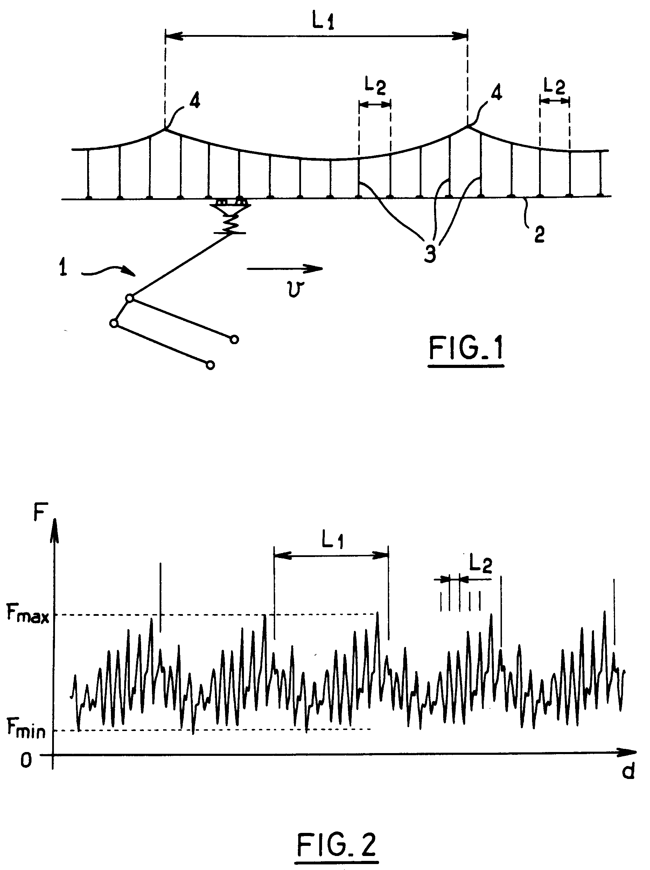

La demanderesse a analysé en détail le comportement des pantographes selon l'art connu en condition de captage à vitesse élevée. Cette analyse porte notamment sur l'effort de contact F entre la ligne caténaire et les bandes de frottement du pantographe comme illustré sur les figures 1 et 2.

Ainsi, la figure 1 montre schématiquement un pantographe 1 en circulation à la vitesse v sous une ligne de courant 2 à suspension caténaire. Cette suspension est réalisée par des pendules 3 qui assurent que la ligne 2 s'étende dans une direction parallèle à la voie sous les portées 4.

La figure 2 représente graphiquement les variations de l'effort de contact F en fonction de la distance d parcourue dans les conditions de fonctionnement de la figure 1.

En analysant ces courbes, la demanderesse a pu établir :

- que l'effort de contact F présente deux périodicités caractéristiques : $L_1$ correspondant à l'intervalle entre deux portées 4 successives et $L_2$ correspondant à l'intervalle entre deux pendules 3 successifs ;
- que les variations les plus brutales de cet effort de contact F sont engendrées à l'échelle des intervalles $L_2$ entre les pendules 3 ;
- que les pantographes connus répondent à la "haute" fréquence $f_2 = v/L_2$ par leur suspension de tête ;
- que ces pantographes répondent à la "basse" fréquence $f_1 = v/L_1$ par leur suspension qui agit sur l'ensemble de leur structure.

Typiquement, si les portées 4 sont espacées de 60 m et si cet intervalle comprend à chaque fois dix pendules 3 espacés de 6 m, le pantographe sera soumis, pour une vitesse v = 250 km/h à un effort ayant les deux fréquences privilégiées

$f_1 = 1,16$ Hz

et

$f_2 = 11,6$ Hz

Etant donné que les transports ferroviaires mettent en jeu des vitesses de plus en plus élevées, il importe de réaliser des pantographes ayant un comportement satisfaisant en réponse à des sollicitations à haute fréquence de l'ordre de cette valeur de 11,6 Hz, voire supérieure.

Or, les pantographes connus ne satisfont pas cette exigence puisque les oscillations de la tête en réponse à cette haute fréquence ne sont pas amorties de sorte que l'effort de contact F présente des variations importantes entre une valeur minimum $F_{min}$ et une valeur maximum $F_{max}$. Il importe de réduire l'écart entre ces valeurs minimum et maximum. En effet, une faible valeur de $F_{min}$ se traduit par un risque de décollement entre les bandes de frottement et la ligne caténaire. Ces décollements nuisent à la qualité du captage de courant en introduisant des disjonctions et causent des arcs électriques qui détériorent les bandes de frottement et la ligne caténaire. De plus, une valeur élevée de $F_{max}$ entraîne des pointes de contrainte excessive entre les bandes de frottement et la ligne caténaire qui sont aussi une cause d'usure prématurée de ces organes.

La présente invention a pour but de remédier aux problèmes ci-dessus, engendrés par les pendules de la suspension caténaire en créant un pantographe permettant notamment d'améliorer le captage du courant à grande vitesse et de réduire l'usure de ses bandes de frottement ainsi que celle de la ligne caténaire.

Ainsi, l'invention selon la revendication 1 propose un pantographe pour véhicule ferroviaire, notamment à grande vitesse comportant un bras supérieur dont l'extrémité supporte une tête pour capter le courant d'une ligne de caténaire suspendue par des pendules espaces tout au long de ladite ligne, la tête étant raccordée à l'extrémité du bras supérieur par des moyens élastiques de suspension comprenant un amortisseur adapté pour agir sur les hautes fréquences d'effort auxquelles le pantographe est soumis, notamment sur les fréquences de passage au niveau des pendules de la suspension caténaire de la ligne; les moyens élastiques de suspension comprenant une boîte de suspension fixée à l'extrémité du bras supérieur, et renfermant un fluide hydraulique, un piston monté coulissant dans ladite boîte, ce piston étant solidaire d'une tige reliée à la tête du pantographe et le piston comportant une ou plusieurs ouvertures de passage du fluide, un ressort hélicoïdal étant monté autour de la tige entre le piston et le fond de la boîte.

Cet amortisseur permet d'atténuer sensiblement les variations les plus brutales de l'effort de contact qui sont engendrées à l'échelle de l'intervalle entre les pendules de la suspension caténaire. Il en résulte pratiquement une élimination des décollements et des contraintes excessives entre la tête et la ligne. Des modes préférées de réalisation sont présentés dans les revendications dépendantes 2 à 5.

Selon une version préférée de l'invention, l'amortisseur présente des caractéristiques d'amortissement suffisantes pour atténuer les variations des efforts de contact dues aux pendules et maintenir celles-ci entre une valeur minimale suffisamment éloignée de zéro pour éviter les décollements de la tête par rapport à la ligne et une valeur maximale située en deçà de celle engendrant un frottement excessif entre la tête et la ligne.

D'autres particularités de l'invention apparaîtront dans la description ci-dessous, lue conjointement aux dessins non limitatifs annexés, dans lesquels :

- la figure 1 est une vue en élévation schématique d'un pantographe en mouvement sous une ligne de courant à suspension caténaire,
- la figure 2 est un graphique des variations de l'effort de contact entre la ligne de courant et les bandes de frottement en fonction de la distance parcourue par le pantographe,
- la figure 3 est une vue en perspective d'un pantographe conforme à l'invention en position déployée,
- la figure 4 représente un élément de suspension destiné au pantographe selon l'invention.

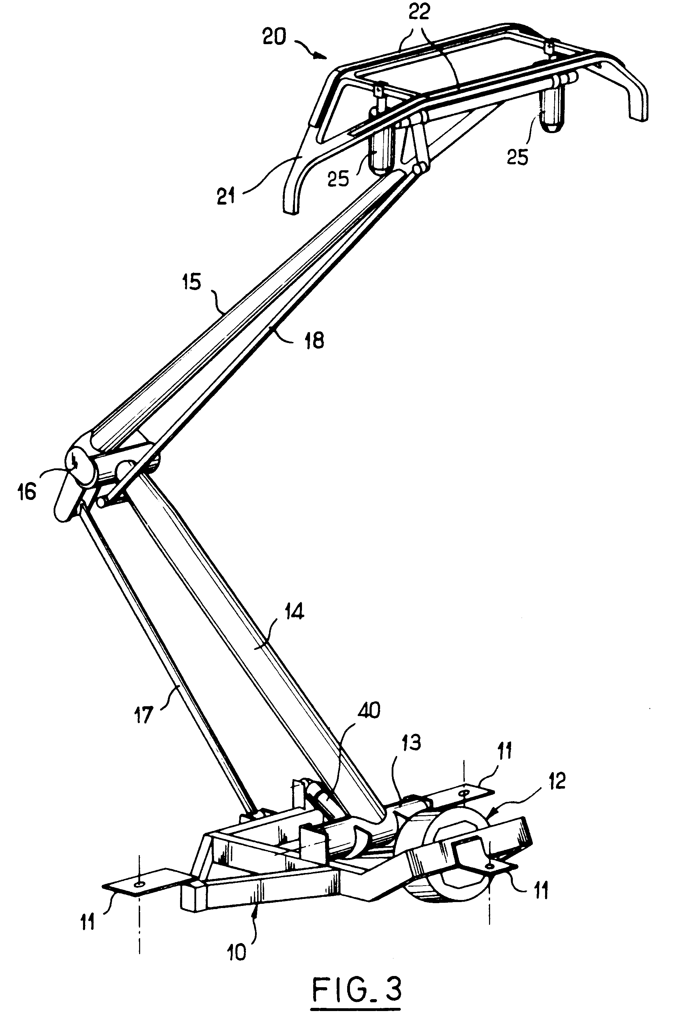

Sur la figure 3, on voit un pantographe dont le socle 10 est fixé sur le véhicule ferroviaire (non représenté) par des brides 11. Un dispositif de commande et d'équilibrage 12 permet de déployer ou de replier le pantographe, ainsi que de fournir un effort statique sur le fil caténaire. Ce dispositif 12 agit sur une articulation 13 pour faire pivoter un bras inférieur 14 relié à un bras supérieur 15 par une autre articulation 16. La stabilité de la structure est obtenue par deux barres supplémentaires 17, 18.

La tête 20 du pantographe comprend un archet 21 qui supporte deux bandes de frottement 22 sensiblement perpendiculaires à la ligne caténaire (non représentée). Cette tête 20 est raccordée à l'extrémité du bras supérieur 15 par l'intermédiaire de deux boîtes de suspension amortie 25 situées de manière symétrique par rapport à la ligne caténaire. Ces boîtes de suspension amortie 25 peuvent, par exemple, faire intervenir l'élasticité d'un ressort et un amortisseur hydraulique.

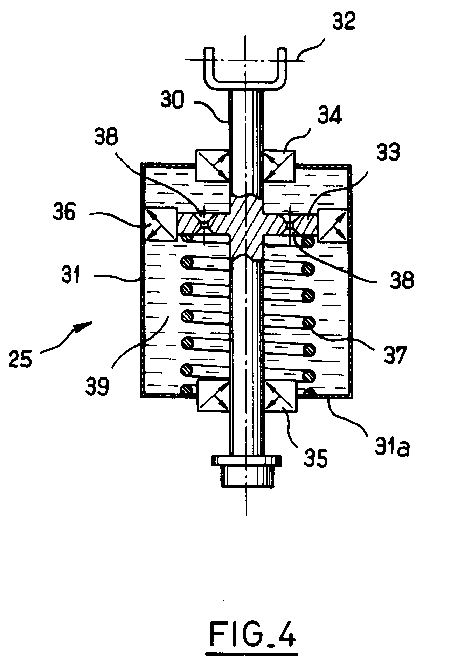

Un exemple particulier est représenté sur la figure 4 où on voit une boîte de suspension amortie 25 comprenant un axe 30 qui traverse un boîtier cylindrique 31 solidaire de l'extrémité du bras supérieur 15. L'axe 30 est muni à son extrémité supérieure de moyens de fixation 32 destinés à recevoir l'archet 21. L'axe 30 comporte, perpendiculairement à sa direction, un piston 33 en forme de disque centré sur l'axe 30 dont le diamètre est légèrement inférieur à celui du boîtier 31. Ce piston 33 peut coulisser, avec l'axe 30, le long du boîtier 31. Des joints annulaires 34, 35 assurent l'étanchéité au passage de l'axe 30 et un joint annulaire 36 permet un contact étanche entre la périphérie du piston 33 et les parois latérales du boîtier 31. Un ressort hélicoïdal 37 est intercalé entre le fond 31a du boîtier 31 et la face inférieure du piston 33. De plus, le boîtier 31 contient un fluide visqueux 39 qui peut traverser le piston 33 par des orifices de petite section 38 calculés pour fournir l'amortissement désiré.

Selon une version avantageuse de l'invention, le pantographe comprend en outre une suspension amortie inférieure 40 qui répond aux mouvements de l'ensemble du pantographe. Cette suspension amortie inférieure peut agir sur l'axe d'articulation 13 du bras inférieur 14 ou sur le bras inférieur 14 lui-même.

Lorsque le pantographe 1 circule à la vitesse v sous une ligne caténaire comme schématisé sur la figure 1, celui-ci est soumis à des contraintes de contact venant d'une part du dispositif de commande 12 qui applique la tête 20 du pantographe contre la ligne 2 et d'autre part de la ligne caténaire 2 elle-même. Cette ligne caténaire présente une modulation selon des intervalles réguliers due au mode de suspension. L'intervalle $L_1$ entre les por-

tées 4 introduit des fluctuations de l'effort de contact à "basse" fréquence $f_1 = v/L_1$, typiquement de l'ordre de grandeur de 1 Hz pour une vitesse v supérieure à 200 km/h. L'intervalle $L_2$ entre les pendules de suspension 3 introduit des fluctuations de l'effort de contact à "haute" fréquence $f_2 = v/L_2$, typiquement de l'ordre de grandeur de 10 Hz pour une vitesse v supérieure à 200 km/h.

Les fluctuations de fréquence $f_1$ sont absorbées et amorties par la suspension amortie inférieure 40 mais l'inertie de l'ensemble du pantographe sur laquelle cette suspension amortie inférieure 40 agit est trop importante pour que cette suspension inférieure puisse avoir une réponse suffisamment rapide aux sollicitations de plus haute fréquence $f_2$.

Cette réponse à la fréquence $f_2$ due aux pendules 3 sera faite par la suspension de tête 25 qui met en jeu une masse dynamique plus petite. Comme cette suspension de tête 25 est amortie, les variations de l'effort de contact à l'échelle de l'intervalle $L_2$ seront atténuées. Or, comme on l'a vu dans le préambule de la présente description, c'est à cette échelle $L_2$ que sont a priori engendrées les variations les plus brutales de cet effort de contact. L'invention permet donc de réduire sensiblement ces variations de sorte que les valeurs extrêmes $F_{min}$ et $F_{max}$ de l'effort de contact se rapprochent. L'augmentation de $F_{min}$ fait pratiquement disparaître les risques de décollement et la réduction de $F_{max}$ permet un captage qui n'use pas exagérément les bandes de frottement ou la ligne caténaire. Ainsi, $F_{min}$ est suffisamment éloigné de zéro pour éviter les décollements de la tête 20 par rapport à la ligne 2 et $F_{max}$ n'excède pas la valeur qui engendre un frottement excessif entre la tête 20 et la ligne 2.

Dans les mouvements relatifs dans les suspensions de tête, on rencontre typiquement des vitesses maximum de l'ordre de 0,5 m/s. On souhaite en général fournir des forces d'amortissement visqueux de l'ordre de 100 N. Une valeur typique de la constante d'amortissement visqueux f de la suspension amortie est donc 200 N s/m. Si la raideur globale des ressorts de cette suspension de tête vaut k = 9 000 N/m et si la tête du pantographe pèse m = 10 kg, on obtiendra, dans ces conditions, une valeur typique du coefficient d'amortissement réduit z valant : $z = f/2\sqrt{km} = 0,33$.

De façon plus générale, une valeur de ce coefficient z comprise entre les valeurs 0,2 et 0,4 fournira, dans le cas des trains à grande vitesse, un compromis avantageux entre l'amortissement de la suspension de tête 25 et son temps de réponse.

Dans la pratique, les caractéristiques optimales de l'amortisseur pourront également être déterminées expérimentalement aux cours d'essais. Au cours de ces essais, on pourra en effet comparer les résultats obtenus à partir d'une série d'amortisseurs ayant des caractéristiques différentes et retenir ainsi celui ou ceux permettant de réduire efficacement l'écart entre les efforts engendrés par les fréquences dues aux pendules 3.

L'invention n'est pas limitée à l'exemple décrit ci-dessus. De multiples modifications peuvent lui être apportées sans sortir du cadre de l'invention. Ainsi, on a décrit une tête de pantographe constituée d'un archet qui comprend deux palettes qui supportent les bandes de frottement. L'invention s'applique en fait à tout type de tête de pantographe qu'on peut munir d'une suspension comme par exemple aux pantographes à bandes à suspensions indépendantes.

Bien entendu, le ou les amortisseurs de la suspension de la tête du pantographe peuvent être séparés des ressorts de suspension, l'essentiel étant que ce ou ces amortisseurs soient le plus près possible de la tête du pantographe.

**Revendications**

1. Pantographe pour véhicule ferroviaire, notamment à grande vitesse comportant un bras supérieur (15) dont l'extrémité supporte une tête (20) pour capter le courant d'une ligne caténaire (2) suspendue par des pendules (3) espacés tout au long de ladite ligne, la tête (20) étant raccordée à l'extrémité du bras supérieur (15) par des moyens élastiques de suspension (25) comprenant un amortisseur (33, 38, 39) adapté pour agir sur les hautes fréquences d'effort auxquelles le pantographe est soumis, notamment sur les fréquences de passage au niveau des pendules (3) de la suspension caténaire de la ligne (2); les moyens élastiques de suspension (25) comprenant une boîte de suspension (31) fixée à l'extrémité du bras supérieur (15), et renfermant un fluide hydraulique (39), un piston (33) monté coulissant dans ladite boîte (31), ce piston étant solidaire d'une tige (30) reliée à la tête (20) du pantographe et le piston (33) comportant une ou plusieurs ouvertures (38) de passage du fluide (39), un ressort hélicoïdal (37) étant monté autour de la tige (30) entre le piston (33) et le fond de la boîte (31).

2. Pantographe conforme à la revendication 1, caractérisé en ce que l'amortisseur (33, 38, 39) présente des caractéristiques déterminées d'amortissement suffisantes pour atténuer les variations des efforts de contact dus aux pendules (3) et maintenir ceux-ci entre une valeur minimale suffisamment éloignée de zéro pour éviter les décollements de la tête (20) par rapport à la ligne (2) et une valeur maximale située en deçà d'une valeur prédéterminée pour laquelle apparaît un frottement excessif entre la tête (20) et la ligne (2).

3. Pantographe conforme à la revendication 2, caractérisé en ce que l'amortisseur (33, 38, 39) présente un coefficient d'amortisseur réduit calculé par la relation: z = f/2√km, z étant compris entre 0,2 et 0,4, dans laquelle:

f est la constante d'amortissement de l'amortisseur

k est la raideur des moyens élastiques de suspension de tête (25)

m est la masse de la tête (20).

4. Pantographe conforme à la revendication 1, caractérisé en ce que la partie inférieure du pantographe comprend en outre une suspension (40) adaptée pour répondre aux mouvements de l'ensemble du pantographe.

5. Pantographe conforme à la revendication 4, caractérisé en ce que ladite suspension (40) est amortie.

**Claims**

1. A pantograph for a rail vehicle, more particularly a high-speed rail vehicle, comprising a top arm (15), the end of which supports a head (20) for collecting current from a catenary (2) suspended by droppers (3) spaced along the entire length of the line, the head (20) being connected to the end of the top arm (15) by elastic suspension means (25) comprising a shock-absorber (33, 38, 39) adapted to act on the force high-frequencies to which the pantograph is subjected, more particularly the frequencies on passing the droppers (3) of the catenary suspension of the line (2); the elastic suspension means (25) comprising a suspension box (31) fixed to the end of the top arm (15) and containing a hydraulic fluid (39), a piston (33) mounted slidably in said box (31), said piston being connected to a rod (30) connected to the head (20) of the pantograph and the piston (33) comprising one or more apertures (38) for the passage of the fluid (39), a helical spring (37) being mounted around the rod (30) between the piston (33) and the bottom of the box (31).

2. A pantograph according to claim 1, characterised in that the shock-absorber (33, 38, 39) has specific shock-absorption characteristics sufficient to attenuate the variations in the contact forces due to the droppers (3) and keep the same between a minimum value sufficiently far away from zero to prevent the head (20) from becoming detached from the line (2), and a maximum value beyond a predetermined value at which excessive friction occurs between the head (20) and the line (2).

3. A pantograph according to claim 2, characterised in that the shock-absorber (33, 38, 39) has a reduced shock-absorber coefficient calculated by the equation: z = f/2 √km, z being between 0.2 and 0.4, wherein:

f is the absorption constant of the shock-absorber

k is the stiffness of the elastic head suspension means (25)

m is the mass of the head (20).

4. A pantograph according to claim 1, characterised in that the bottom part of the pantograph also comprises a suspension (40) adapted to respond to movements of the pantograph assembly.

5. A pantograph according to claim 4, characterised in that the said suspension (40) is damped.

**Patentansprüche**

1. Scherenstromabnehmer für Eisenbahnwagen, insbesondere für Hochgeschwindigkeitseisenbahnwagen, mit einem oberen Arm (15), dessen Ende einen Kopf (20) trägt, um den Strom einer Kettenfahrleitung (2) abzugreifen, die an Fahrdrahthängern (3) aufgehängt ist, die sich entlang der gesamten Leitung jeweils in gegenseitigem Abstand befinden, wobei der Kopf (20) mit dem Ende des oberen Arms (15) über elastische Aufhängungsmittel (25) verbunden ist, die eine Dämpfungseinrichtung (33, 38, 39) aufweisen, die so beschaffen ist, daß sie auf die hohen Andruckfrequenzen, denen der Scherenstromabnehmer unterworfen ist, und insbesondere auf die Frequenzen bei der Vorbeibewegung auf Höhe der Fahrdrahthänger (3) der aufgehängten Kettenfahrleitung (2) anspricht, wobei die elastischen Kopfaufhängungsmittel (25) ein am Ende des oberen Arms (15) befestigtes und ein Hydraulikfluid (39) enthaltendes Aufhängungsgehäuse (31) und einen im Gehäuse (31) verschiebbar angebrachten Kolben (33), der mit einem mit dem Kopf (20) des Scherenstromabnehmers verbundenen Stift (30) aus einem Stück gebildet ist, umfassen, und wobei dieser Kolben (33) eine oder mehrere Durchlaßöffnungen (38) für das Fluid (39) umfaßt und um den Stift (30) zwischen dem Kolben (33) und dem Boden (31a) des Gehäuses (31) eine Schraubenfeder (37) angebracht ist.

2.  Scherenstromabnehmer gemäß Anspruch 1, dadurch gekennzeichnet, daß die Dämpfungseinrichtung (33, 38, 39) bestimmte Dämpfungseigenschaften aufweist, die ausreichen, um die durch die Fahrdrahthänger (3) bedingten Schwankungen der Berührungsandrücke zu dämpfen und diese zwischen einem minimalen Wert, der vom Nullpunkt ausreichend weit entfernt ist, um Abhebungen des Kopfes (20) von der Leitung (2) zu vermeiden, und einem maximalen Wert, der unter einem vorgegebenen Wert liegt, für den zwischen dem Kopf (20) und der Leitung (2) eine übermäßige Reibung auftritt, zu halten.

3.  Scherenstromabnehmer gemäß Anspruch 2, dadurch gekennzeichnet, daß die Dämpfungseinrichtung einen verringerten Dämpfungskoeffizienten besitzt, der mittels der Beziehung $z = (f/2) \cdot (k \cdot m)^{-1/2}$ berechnet wird und zwischen 0,2 und 0,4 liegt, wobei

f die Dämpfungskonstante der Dämpfungseinrichtung,

k die Steifigkeit der elastischen Kopfaufhängungsmittel (25) und

m die Masse des Kopfes (20) ist.

4.  Scherenstromabnehmer gemäß Anspruch 1, dadurch gekennzeichnet, daß der untere Teil des Scherenstromabnehmers außerdem eine Aufhängung (40) umfaßt, die so beschaffen ist, daß sie auf Bewegungen des gesamten Scherenstromabnehmers anspricht.

5.  Scherenstromabnehmer gemäß Anspruch 4, dadurch gekennzeichnet, daß die Aufhängung (40) gedämpft ist.

FIG.1

FIG. 2

FIG. 3

FIG.4